**Europäisches Patentamt**

**European Patent Office**

**Office européen des brevets**

(19)

(11) Veröffentlichungsnummer : **0 391 991 B1**

(12)

# EUROPÄISCHE PATENTSCHRIFT

(45) Veröffentlichungstag der Patentschrift :
28.10.92 Patentblatt 92/44

(51) Int. Cl.⁵ : **G06K 11/06, H01H 25/04**

(21) Anmeldenummer : **89909727.3**

(22) Anmeldetag : **23.08.89**

(86) Internationale Anmeldenummer :
**PCT/EP89/00935**

(87) Internationale Veröffentlichungsnummer :
**WO 90/02384 08.03.90 Gazette 90/06**

(54) STEUERKNÜPPELANORDNUNG FÜR TASTATUREN, INSBESONDERE COMPUTER-TASTATUREN.

(30) Priorität : **29.08.88 US 238332**
**04.04.89 US 332950**

(43) Veröffentlichungstag der Anmeldung :
**17.10.90 Patentblatt 90/42**

(45) Bekanntmachung des Hinweises auf die
Patenterteilung :
**28.10.92 Patentblatt 92/44**

(84) Benannte Vertragsstaaten :
**AT BE CH DE FR GB IT LI LU NL SE**

(56) Entgegenhaltungen :
**EP-A- 0 134 585**
**US-A- 4 395 134**
**US-A- 4 575 591**
**Research Disclosure, No. 253, May 1985 (Emsworth, Hampshire, GB), "Snap on cursor control keytop adapter", abstract No. 25327**

(73) Patentinhaber : **ROTAL INDUSTRIES &**
**TRADING LTD.**
**5, Hamasger Str. I.Z., Natanya 42378**
**Natanya 42100 (IL)**
Patentinhaber : **TAL, Jakob**
**Untermarkt 15**
**W-6460 Gelnhausen (DE)**

(72) Erfinder : **TAL, Amir**
**18a Rachel Str.**
**Givatatim 53482 (IL)**

(74) Vertreter : **Helber, Friedrich G., Dipl.-Ing. et al**
**Zenz, Helber & Hosbach Patentanwälte**
**Scheuergasse 24**
**W-6144 Zwingenberg (DE)**

EP 0 391 991 B1

## Beschreibung

Die Erfindung betrifft eine Steuerknüppelanordnung zur wahlweisen Betätigung einer Anzahl von vorbestimmten Tasten einer Tastatur, insbesondere eines Computers mittels eines über dem Tastenfeld mit den zu betätigenden Tasten verschwenkbar gehaltenen Steuerknüppels, dessen Schwenkbewegungen richtungsabhängig auf jeweils wenigstens einen Betätigungsarm aus einer der Anzahl der zu betätigenden Tasten entsprechenden Anzahl von mit ihren freien Enden bis unmittelbar über die jeweils zu betätigende Taste geführten Betätigungsarmen so übertragen werden, daß diese Taste niedergedrückt wird.

Computer sind im allgemeinen mit einer Tastatur als Eingabeeinheit versehen, welche wenigstens einen nach Art einer Schreibmaschinentastatur angeordneten Satz von Tasten aufweist. Auf einer Seite dieses Tastatursatzes ist normalerweise ein Tastaturblock mit Zifferntasten entsprechend üblichen Rechnern angeordnet, d.h. in einer Tastenanordnung von 3 x 3 Tasten entsprechend den Ziffern 1 bis 9. Diese Zifferntasten, die im wesentlichen als Drucktasten ausgebildet sind, werden auch zur Steuerung anderer Funktionen des Computers verwendet. Die den Ziffern 2, 4, 6 und 8 entpsrechenden Tasten werden auch als sogenannte Positionsanzeige- oder Cursor-Steuertasten verwendet, mit denen die Position der Schreibmarke (= Cursor) auf der Rechner-Anzeigeeinheit schrittweise, beispielsweise um eine Zeile nach oben oder unten oder eine Stelle nach rechts oder links bewegt wird. Die den Ziffern 3 und 9 entsprechenden Tasten werden ebenfalls zur Bewegung der Schreibmarke nach oben bzw. unten verwendet, und zwar jeweils um eine Seite bei jeder Betätigung. Die den Ziffern 1 und 7 zugeordneten Tasten dienen als sogenannte "end"- und "home"-Tasten, mit denen die Schreibmarke bei einer Betätigung in die End- bzw. Anfangsstellung bewegt wird.

Es wird davon ausgegangen, daß die den Rechner bedienende Person die Cursor-Steuertasten in gleicher Weise wie bei einer Schreibmaschine bedient, d.h. durch manuelles Herabdrücken der gewünschten Taste. Computer werden jedoch häufig zu anderen Zwecken als zur Textverarbeitung eingesetzt. Insbesondere werden sie in vielen Fällen zur Erstellung von Zeichnungen unter Anwendung der verschiedensten CAD-Programme und noch häufiger zum Spielen verschiedener Computer-Spiele verwendet. Bei diesen Anwendungen ist die Bewegung des Cursors von großer Bedeutung und es ist deshalb erwünscht, wenn solche Cursor-Bewegungen ohne Beobachtung der Fingerposition auf den Tasten gemacht werden können. Während bei einigen Anwendungsfällen für die Cursor-Bewegung die Steuerung mit einer sogenannten "Maus" erfolgt, können in anderen Fällen, insbesondere bei Spielen Steuerknüppel verwendet werden, für sich welche auch zunehmend der aus dem angelsächsischen stammenden Begriff "Joystick" durchgesetzt hat. Das Problem sowohl mit der Maus als auch dem Joystick besteht darin, daß gesonderte Anschlußkabel zum Rechner und zusätzliche Ausrüstung, beispielsweise in Form von Schnittstellen-Einsteckkarten im Rechner erforderlich sind, damit dieser eine Eingabe über die erwähnten Geräte akzeptiert.

In jüngerer Zeit wurde vorgeschlagen, einen Joystick so auszubilden, daß er an einer normalen Rechner-Tastatur angeordnet werden kann, wobei er so positioniert wird, daß die Bewegungen des Joysticks die Cursor-Steuertasten betätigen. Ein solcher Joystick oder Steuerknüppel ist im US-Patent Nr. 4 575 591 offenbart. Der dort beschriebene Steuerknüppel benötigt ein plattenförmiges Basiselement, welches am Tastaturgehäuse befestigt wird und eine von den Tasten beabstandete Handhabe für den Steuerknüppel trägt. Am Basiselement ist ein Kardan- oder Kugelgelenk gehaltert, an dem das untere Ende der Handhabe so angreift, daß die Handhabe in beliebige Richtungen verschwenkbar ist. Betätigungsarme sind am Basiselement so gehaltert, daß sie durch die Bewegung der Handhabe in Kontakt mit den Tasten gebracht werden können. Diese Steuerknüppelanordnung ist nicht nur relativ kompliziert aufgebaut, sondern erfordert ein relativ großflächiges Basiselement, welches am Tastaturgehäuse montiert werden muß. Darüber hinaus ist es auch so, daß das erwähnte Patent lediglich die Anbringung des Steuerknüppels am Tastaturgehäuse für einen Computer offenbart, während es auch andere Geräte, beispielsweise in der Hand gehaltene elektronische Spiele gibt, welche mit Cursor-Steuertasten betätigbar sind, bei denen es ebenfalls wünschenswert wäre, wenn sie mittels eines Steuerknüppels betätigbar wären, sofern ein solcher nachrüstbar wäre.

Der Erfindung liegt die Aufgabe zugrunde, eine relativ einfach aufgebaute Steuerknüppelanordnung zu schaffen, welche so an einer Tastatur anbringbar ist, daß mittels ihrer die Cursor-Steuertasten betätigt werden können. Dabei soll der Steuerknüppel für die Betätigung der Cursor-Kontrolltasten einfach anbringbar und abnehmbar sein und keinen gesonderten beweglichen Teil aufweisen.

Ausgehend von einer Steuerknüppelanordnung der eingangs erwähnten Art wird diese Aufgabe durch eine Steuerknüppelanordnung gemäß Anspruch 1 gelöst.

Das tastaturseitige Ende des Schafts des Steuerknüppels wird dabei zweckmäßig auf einer etwa mittig innerhalb der zu betätigenden Tasten des Tastenfeldes angeordneten Taste gehaltert. In zweckmäßiger Weiterbildung der Erfindung durchsetzt der Steuerknüppel-Schaft dabei den integralen Betätigungsbauteil etwa mittig, da dann die am Betätigungsbauteil einstückig angesetzten Betätigungsarme im wesentlichen gleiche Länge aufweisen.

Das tastaturseitige Ende des Schafts des Steuerknüppels wird zweckmäßig lösbar in oder an einer auf der zugeordneten Taste angebrachten Montageplatte befestigt, um den Rechner wahlweise durch Druckbetätigung der Tasten oder mittels der erfindungsgemäßen Steuerknüppelanordnung bedienen zu können.

Die Verschwenkung des Steuerknüppels in alle Richtungen derart, daß jeweils einer der vorgesehenen Betätigungsarme die zugeordnete Taste niederdrückt, wird in bevorzugter Ausgestaltung dadurch erreicht, daß der Schaft des Steuerknüppels im Bereich seines tastaturseitigen Endes einen Abschnitt mit verringerten Querschnittsabmessungen aufweist, wodurch der Schaft in diesem Bereich also in hinreichendem Maße elastisch verbiegbar wird, um die angestrebten Schwenkbewegungen zu ermöglichen.

Die Betätigungsarme liegen zweckmäßig in einer gemeinsamen Ebene und weisen im Bereich ihrer freien Enden einen vom jeweiligen Betätigungsarm in Richtung zur zugeordneten Taste abgewinkelten Endabschnitt auf. Dabei ist es dann möglich, die abgewinkelten Endabschnitte in ihrer Länge jeweils so zu bemessen, daß ihre freien Enden jeweils gleichen Abstand von der zugeordneten Taste haben. Damit wird erreicht, daß die Betätigungswege des Steuerknüppels für die nicht in der gleichen Ebene liegenden Tasten jeweils gleich groß werden.

Die Montageplatte, mittels derer das tastaturseitige Ende des Schafts des Steuerknüppels an der zugeordneten Taste befestigt wird, wird zweckmäßig als im wesentlichen ebenflächige relativ dünne Platte ausgebildet, deren Größe im wesentlichen der Größe der Betätigungsfläche der zugeordneten Taste entspricht. Die Montageplatte kann dabei mit der zugeordneten Taste verklebt werden. Aufgrund ihrer geringen Dicke und formmäßigen Anpassung an die zugeordnete Taste behindert sie die Betätigung dieser Taste bei abgenommenem Steuerknüppel nicht.

Für die Verklebung der Montageplatte mit der zugeordneten Taste ist sie zweckmäßig auf ihrer Befestigungsfläche mit einem Kontaktkleber beschichtet und auf der Kontaktkleber-Schicht mit einer vor der Verklebung mit der Taste abziehbaren, mit einer Antihaftschicht versehenen Abdeckung versehen.

Da die Betätigungsflächen der Tasten häufig in Anpassung an die Fingerkuppen der Bedienungsperson leicht konkav gewölbt sind, ist es zweckmäßig, wenn die Rontaktkleber-Schicht auf einem an der der zugeordneten Taste zugewandten Montageplatten-Unterseite angeordnete, in Betätigungsrichtung um ein bestimmtes Maß elastisch zusammendrückbaren Zwischenträger vorgesehen ist. Beidseitig mit Rontaktkleber beschichtete sogenannte "Doppelklebebänder" mit einem in der erforderlichen Weise elastisch zusammendrückbaren Trägerband stehen zur Verfügung.

Das tastaturseitige Ende des Steuerknüppels kann mit einem Gewinde versehen sein, welches dann in ein komplementäres Gegengewinde in der Montageplatte eingeschraubt wird.

Alternativ kann das freie Ende des Schaftes des Steuerknüppels auch durch Reibschluß in einer komplementären Öffnung in der Montageplatte gehalten sein. Auch andere form- oder kraftschlüssige, lösbare Verbindungen sind denkbar.

Sowohl der integrale Betätigungsbauteil als auch der Steuerknüppel sind vorzugsweise aus einem thermoplastischen Kunststoff im Spritzgußverfahren hergestellt.

Die Erfindung ist in der folgenden Beschreibung eines Ausführungsbeispiels in Verbindung mit der Zeichnung näher erläutert, und zwar zeigt:

Fig. 1 eine Voderansicht eines Ausführungsbeispiels der in der erfindungsgemäßen Weise ausgebildeten Steuerknüppelanordnung;

Fig. 2 eine Draufsicht auf die Steuerknüppelanordnung gemäß Fig. 1;

Fig. 3 eine teilweise geschnittene Seitenansicht der in Fig. 1 gezeigten Steuerknüppelanordnung

Fig. 4 eine Explosionsansicht der in Fig. 3 gezeigten Steuerknüppelanordnung; und

Fig. 5 eine Schnittansicht, in welcher eine Befestigungsmöglichkeit der Steuerknüppelanordnung veranschaulicht ist.

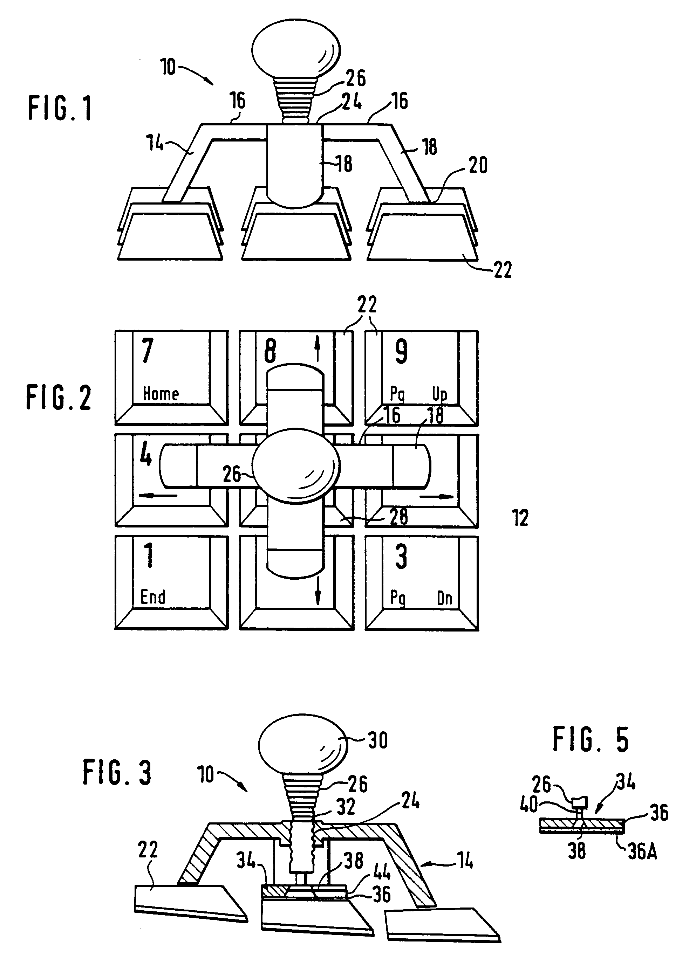

Figur 1 zeigt als Ausführungsbeispiel der Erfindung eine Steuerknüppelanordnung 10, die auf einer Taste des Ziffernblocks einer Tastatur 12 angeordnet ist.

Es sei angenommen, daß es sich um eine Tastatur vom Typ 5060 oder 5151 handelt, wie sie üblicherweise für Computer-Systeme verwendet werden. Der Computer selbst und die Betrachtungseinheit, d.h. der Bildschirm, sind nicht dargestellt, jedoch ist ersichtlich, daß sie für ein funktionsfähiges System erforderlich sind. Die Steuerknüppelanordnung 10 weist einen Betätigungsbauteil 14 mit in Umfangsrichtung verteilt angeordneten radial verlaufenden Betätigungarmen 16 auf, die an ihren Enden in abwärts abgewinkelten Endabschnitte 18 unterschiedlicher Länge auslaufen, so daß ihre freien Enden 20 jeweils gleichen Abstand von den jeweils zu betätigenden Tasten 22 haben. Der Betätigungsbauteil 14 ist mit einer mittigen Öffnung 24 zur Aufnahme der schaftförmigen Handhabe 26 des Steuerknüppels versehen.

Die Öffnung 24 und die Handhabe 26 sind jeweils so geformt, daß der Betätigungsbauteil 14 unverschieblich auf der Handhabe 26 gehalten ist.

Fig. 2 zeigt eine Draufsicht auf die Steuerknüppelanordnung gemäß Fig. 1, wobei ersichtlich ist, daß sie auf einer mittigen Taste 28 der Tastatur 12 so ausgerichtet angeordnet ist, daß die Betätigungsarme 16 des Betätigungsbauteils 14 mit ihren zugeordneten abgewinkelten Endabschnitten 18 jeweils oberhalb der Cursor-Steuertasten 22 positioniert sind. Es ist erkennbar, daß die schaftförmige Handhabe 26 in senkrechter Richtung nach oben über den Betätigungsbauteil 14 vorsteht.

Fig. 3 zeigt eine Schnittansicht der Steuerknüppelanordnung gemäß den Figuren 1 und 2. Die Handhabe 26 kann einen vergrößerten oberen Endabschnitt 30 haben, die vom Benutzer ergriffen werden kann. In dem mit 32 bezeichneten Bereich ist die schaftförmige Handhabe so bemessen, daß sie stramm innerhalb der Öffnung 24 im Betätigungsbauteil 14 sitzt. Der Sitz zwischen der Handhabe 26 und dem Betätigungsbauteil 14 kann entweder ein Schiebesitz sein, wobei sowohl die Handhabe 26 als auch die Öffnung 24 konzentrisch kreisförmig sind, oder sie können beide mit Verriegelungsmitteln, beispielsweise einem Vorsprung und einem Schlitz versehen sein, um eine Drehung relativ zueinander zu verhindern. Alternativ können die Betätigungshandhabe und die Öffnung auch mit komplementären Gewinden versehen sein.

Die Steuerknüppelanordnung ist in ihrer Lage über den Cursor-Steuertasten durch Befestigungsmittel 34 an der Mitteltaste, und zwar üblicherweise der die Ziffer "5" tragenden Ziffertaste, befestigt. Die Befestigungsmittel 34 weisen in einer Ausführungsform eine relativ dünne Kunststoff-Montageplatte 36 auf, die so geformt ist, daß sie sich den Abmessungen und der Form der Oberfläche der Mitteltaste anpaßt. Auf die Unterseite der Montageplatte 16 ist ein Kleber aufgetragen, mittels dessen sie haftend auf der Oberseite der mittleren Taste befestigbar ist. Für diesen Zweck kann ein beidseitig mit Kleber beschichtetes Band 36A (siehe Fig. 5) verwendet werden. Die Montageplatte 36 kann mit einer mittigen Öffnung 38 zur Aufnahme des unteren Endes 40 der Handhabe 26 versehen sein. Dieses Ende 40 weist einen verringerten Durchmesser auf, so daß es im Vergleich zum restlichen Teil der Handhabe relativ leicht elastisch verbiegbar ist. Das äußerste untere Ende des Endabschnitts 40 kann wiederum leicht vergrößert sein, und eine mit einem Hinterschnitt versehene Öffnung 38 erlaubt es, den Endabschnitt 40 in die Öffnung 38 einzurasten. Bei einer abgewandelten Ausführungsform kann das untere Ende 40 dagegen im Bereich der Öffnung 38 mit Gewinde versehen sein, um die Handhabe 26 abnehmbar in der Montageplatte 36 zu haltern. Speziell bei dem in Fig. 3 gezeigten Ausführungsbeispiel hat das äußere Ende die Form einer kegelstumpfförmigen Pyramide. Ein passend geformter Aufnahmeschlitz 44 ist in der Montageplatte 36 eingeformt, so daß der Endabschnitt 42 von einer Seite der Montageplatte 36 aus in den Schlitz 44 einschiebbar ist. Der Schlitz 44 erstreckt sich so weit in die Montageplatte 36, daß die Handhabe 26 in voll in die Montageplatte 36 eingeschobenem Zustand mittig über der Montageplatte 36 ausgerichtet ist.

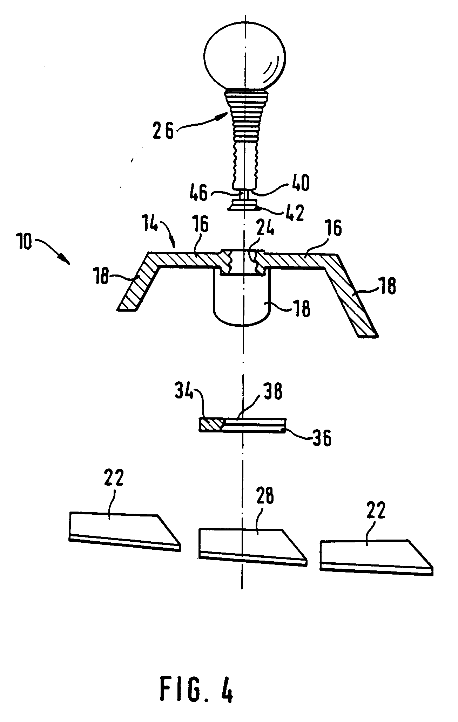

Fig. 4 zeigt den in Fig. 3 dargestellten Steuerknüppel 10 in einer Explosionsansicht, in welcher der Betätigungsbauteil 14 und die Montageplatte 36 geschnitten dargestellt sind. Aus Fig. 4 geht auch deutlicher die Konfiguration des Endabschnitts 42 hervor. Diese Ansicht zeigt auch, daß der Endabschnitt 40 einen im Durchmesser verringerten Abschnitt 46 aufweist, welcher die elastische Verbiegung der Handhabe 26 relativ zur Montageplatte 36 ermöglicht.

Beim Gebrauch der erfindungsgemäßen Steuerknüppelanordnung können unterschiedliche Empfindlichkeitsgrade, d.h. die zum Niederdrücken einer Taste erforderliche Größe der Bewegung der Handhabe 26 dadurch eingestellt werden, daß die Position des Betätigungsbauteils 14 auf der Handhabe durch Veränderung, des Abstands zwischen den Endabschnitten 18 und den zugeordneten Tasten verändert wird.

Die Erfindung ist vorstehend in Verbindung mit einem Ausführungsbeispiel erläutert. Es ist ersichtlich, daß eine Vielzahl von Abwandlungen des beschriebenen Aufbaus im Rahmen des Erfindungsgedankens möglich ist. Die beschriebenen Ausgestaltungen und Komponenten können im Rahmen des Erfindungsgedankens in der Praxis speziellen Arbeitsbedingungen angepaßt werden. Insbesondere ist festzuhalten, daß die erfindungsgemäße Steuerknüppelanordnung nicht auf den Einsatz bei Computer-Tastaturen beschränkt ist, sondern mit Vorteil auch zur Betätigung von anderen Tastaturen eingesetzt werden kann.

**Patentansprüche**

1. Steuerknüppelanordnung (10) zur wahlweisen Betätigung einer Anzahl von vorbestimmten Tasten (22) einer Tastatur, insbesondere eines Computers, mittels eines über dem Tastenfeld mit den zu betätigenden Tasten verschwenkbar gehalterten Steuerknüppels, dessen Schwenkbewegung richtungsabhängig auf jeweils wenigstens einen Betätigungsarm (16) aus einer der Anzahl der zu betätigenden Tasten entsprechenden Anzahl von mit ihren freien Enden (20) bis unmittelbar über die jeweils zu betätigende Taste geführten Betätigungsarmen so übertragen wird, daß diese Taste niedergedrückt wird,
   **dadurch gekennzeichnet,**
   daß das tastaturseitige Ende des Schafts (26) des Steuerknüppels auf einer der Tasten (22) des Tastenfeldes gehaltert ist, und daß die Betätigungsarme (16) zu einem integralen Betätigungsbauteil (14) zusammengeschlossen sind, welcher von einem Abschnitt des Steuerknüppel-Schafts (26) durchsetzt wird.

2. Steuerknüppelanordnung nach Anspruch 1, dadurch gekennzeichnet, daß das tastaturseitige Ende des Schafts (26) des Steuerknüppels auf einer etwa mittig innerhalb der zu betätigenden Tasten des Tastenfeldes angeordneten Taste (28) gehaltert ist.

3. Steuerknüppelanordnung nach Anspruch 1 oder 2, dadurch gekennzeichnet, daß der Betätigungsbauteil (14) etwa mittig vom Steuerknüppel-Schaft (26) durchsetzt wird.

4. Steuerknüppelanordnung nach einem der Ansprüche 1 bis 3, dadurch gekennzeichnet, daß das tastaturseitige Ende des Schafts (26) des Steuerknüppels lösbar in oder an einer auf der zugeordneten Taste angebrachten Montageplatte (36) befestigt ist.

5. Steuerknüppelanordnung nach einem der Ansprüche 1 bis 4, dadurch gekennzeichnet, daß der Schaft (26) des Steuerknüppels im Bereich seines tastaturseitigen Endes einen Abschnitt (40; 46) mit verringerten Querschnittsabmessungen aufweist, welcher durch elastische Verbiegung die Verschwenkung des Steuerknüppels ermöglicht.

6. Steuerknüppelanördnung nach einem der Ansprüche 1 bis 5, dadurch gekennzeichnet, daß die Betätigungsarme (16) in einer gemeinsamen Ebene liegen und im Bereich ihrer freien Enden eine vom jeweiligen Betätigungsarm (16) in Richtung zur zugeorndeten Taste abgewinkelten Endabschnitt (18) aufweisen.

7. Steuerknüppelanordnung nach Anspruch 6, dadurch gekennzeichnet, daß die abgewinkelten Endabschnitte (18) in ihrer Länge jeweils so bemessen sind, daß ihre freien Enden (20) jeweils gleichen Abstand von der zugeordneten Taste (22) haben.

8. Steuerknüppelanordnung nach Anspruch 4, dadurch gekennzeichnet, daß die Montageplatte (36) als im wesentlichen ebenflächige relativ dünne Platte ausgebildet ist, deren Größe im wesentlichen der Größe der Betätigungsfläche der zugeordneten Taste (28) entspricht.

9. Steuerknüppelanordnung nach Anspruch 8, dadurch gekennzeichnet, daß die Montageplatte (36) mit der zugeordneten Taste verklebt ist.

10. Steuerknüppelanordnung nach Anspruch 9, dadurch gekennzeichnet, daß die Montageplatte (36) auf ihrer mit der zugeordneten Taste (28) zu verklebenden Befestigungsfläche mit einem Kontaktkleber beschichtet und auf der Kontaktkleber-Schicht mit einer vor der Verklebung mit der Taste (28) abziehbaren, mit einer Antihaftschicht versehenen Abdeckung versehen ist.

11. Steuerknüppelanordnung nach Anspruch 10, dadurch gekennzeichnet, daß die Kontaktkleber-Schicht auf einem an der der zugeordneten Taste (28) zugewandten Montageplatten-Unterseite angeordnete, in Tasten-Betätigungsrichtung um ein bestimmtes Maß zusammendrückbaren Zwischenträger (38) vorgesehen ist.

12. Steuerknüppelanordnung nach Anspruch 4 oder nach einem der Ansprüche 5 bis 10, wenn abhängig von Anspruch 4, dadurch gekennzeichnet, daß das tastaturseitige Ende des Steuerknüppel-Schafts (26) mit einem Gewinde versehen ist, welches in ein komplementäres Gegengewinde in der Montageplatte (36) eingeschraubt ist.

13. Steuerknüppelanordnung nach Anspruch 4 oder nach einem der Ansprüche 5 bis 10, wenn abhängig von Anspruch 4, dadurch gekennzeichnet, daß das freie Ende des Schafts (26) des Steuerknüppels durch Reibschluß in einer komplementären Öffnung in der Montageplatte (36) gehalten ist.

14. Steuerknüppelanordnung nach einem der Ansprüche 1 bis 13, dadurch gekennzeichnet, daß der integrale Betätigungsbauteil (14) im Spritzgußverfahren aus Kunststoff hergestellt ist.

15. Steuerknüppelanordnung nach einem der Ansprüche 1 bis 14, dadurch gekennzeichnet, daß der Steuerknüppel-Schaft (26) im Spritzgußverfahren aus Kunststoff gespritzt ist.

**Claims**

1. Joystick arrangement (10) for selectively actuating a number of predetermined keys (22) of a keyboard, particularly on a computer, by means of a joystick which is pivotally mounted above the key set with the keys to be actuated and whose pivotal movement is so transferred in dependence on its direction to at least one actuating arm (16) of a number, which corresponds to the number of the keys to be actuated, of actuating arms whose free ends (20) are guided to a point directly above the key to be actuated, that this key is depressed, characterised in that the keyboard end of the shaft (26) of the joystick is mounted on one of the keys (22) of the key set and that the actuating arms (16) are locked together to form an integral actuating unit (14) through which a section of the joystick shaft (26) passes.

2. Joystick arrangement as claimed in Claim 1, characterised in that the keyboard end of the shaft (26) of the joystick is mounted on a key (28) which is disposed approximately centrally within the keys which are to be actuated of the key set.

3. Joystick arrangement as claimed in Claim 1 or 2, characterised in that the joystick shaft (26) passes approximately centrally through the actuating unit (14).

4. Joystick arrangement as claimed in one of Claims 1 to 3, characterised in that the keyboard end of the shaft (26) of the joystick is releasably secured in or on a mounting plate (36) secured to the associated key.

5. Joystick arrangement as claimed in one of Claims 1 to 4, characterised in that the shaft (26) of the joystick has a section (40; 46) in the region of its keyboard end with reduced cross-sectional dimensions which renders the pivotal movement of the joystick possible by virtue of elastic deformation.

6. Joystick arrangement as claimed in one of Claims 1 to 5, characterised in that the actuating arms (16) lie in a common plane and in the vicinity of their free ends have an end section (18) which is angled away from the respective actuating arm (16) in the direction towards the associated key.

7. Joystick arrangement as claimed in Claim 6, characterised in that the length of the angled end sections (18) is so dimensioned that their free ends (20) each have the same spacing from the associated key (22).

8. Joystick arrangement as claimed in Claim 4, characterised in that the mounting plate (36) is constructed as a substantially flat surfaced relatively thin plate whose size substantially corresponds to the size of the actuating surface of the associated key (28).

9. Joystick arrangement as claimed in Claim 8, characterised in that the mounting plate (36) is secured to the associated key with adhesive.

10. Joystick arrangement as claimed in Claim 9, characterised in that the mounting plate (36) is coated with a contact adhesive on its securing surface which is to be adhered to the associated key (28) and is provided on the layer of contact adhesive with a cover which is provided with a release layer and may be pulled off before the fastening to the key (28).

11. Joystick arrangement as claimed in Claim 10, characterised in that the layer of contact adhesive is provided on an intermediate carrier (38) which is arranged on the undersurface of the mounting plate directed towards the associated key (28) and which may be compressed by a certain amount in the key actuation direction.

12. Joystick arrangement as claimed in Claim 4 or as claimed in one of Claims 5 to 10 when dependent on Claim 4, characterised in that the keyboard end of the joystick shaft (26) is provided with a screw thread which is screwed into a complementary screw thread in the mounting plate (36).

13. Joystick arrangement as claimed in Claim 4 or as claimed in one of Claims 5 to 10 when dependent on Claim 4, characterised in that the free end of the shaft (26) of the joystick is frictionally locked in a complementary opening in the mounting plate (36).

14. Joystick arrangement as claimed in one of Claims 1 to 13, characterised in that the integral actuating unit (14) is manufactured of plastics material in an injection moulding process.

15. Joystick arrangement as claimed in one of Claims 1 to 14, characterised in that the joystick shaft (26) is manufactured of plastics material in an injection moulding process.

**Revendications**

1. Dispositif à levier de commande (10) pour l'actionnement au choix d'un certain nombre de touches déterminées (22) d'un clavier, en particulier d'un ordinateur, au moyen d'un levier de commande monté orientable au-dessus du panneau de touches comportant les touches à actionner et dont chaque mouvement d'orientation est transmis à au moins un bras d'actionnement (16) d'un certain nombre, correspondant au nombre des touches à actionner, de bras d'actionnement, dont l'extrémité libre (20) se trouve immédiatement au-dessus de la touche à actionner, de façon que cette touche soit enfoncée, caractérisé par le fait que l'extrémité côté clavier de la tige (26) du levier de commande est montée sur une des touches (22) du panneau de touches et que les bras d'actionnement (16) sont réunis en un élément d'actionnement monobloc (14) qui est traversé par une partie de la tige (26) du levier de commande.

2. Dispositif à levier de commande selon la revendication 1, caractérisé par le fait que l'extrémité côté clavier de la tige (26) du levier de commande est montée sur une touche (28) placée à peu près au milieu au sein des touches à actionner du panneau de touches.

3.  Dispositif à levier de commande selon l'une des revendications 1 et 2, caractérisé par le fait que l'élément d'actionnement (14) est traversé à peu près au milieu par la tige (26) du levier de commande.

4.  Dispositif à levier de commande selon l'une des revendications 1 à 3, caractérisé par le fait que l'extrémité côté clavier de la tige (26) du levier de commande est fixée de manière amovible dans ou sur une plaque de montage (36) placée sur la touche correspondante.

5.  Dispositif à levier de commande selon l'une des revendications 1 à 4, caractérisé par le fait que la tige (26) du levier de commande présente, dans la zone de son extrémité côté clavier, une partie (40 ; 46) à section de dimensions réduites qui permet, par flexion élastique, l'orientation du levier de commande.

6.  Dispositif à levier de commande selon l'une des revendications 1 à 5, caractérisé par le fait que les bras d'actionnement (16) sont dans un plan commun et présentent, dans la zone de leur extrémité libre, une partie extrême (18) un angle avec eux dirigée vers la touche correspondante.

7.  Dispositif à levier de commande selon la revendication 6, caractérisé par le fait que les parties extrêmes faisant un angle (18) ont chacune une longueur telle que leurs extrémités libres (20) soient toutes à la même distance de la touche (22) correspondante.

8.  Dispositif à levier de commande selon la revendication 4, caractérisé par le fait que la plaque de montage (36) est une plaque relativement mince sensiblement plane dont la grandeur correspond sensiblement à la grandeur de la surface d'actionnement de la touche correspondante (28).

9.  Dispositif à levier de commande selon la revendication 8, caractérisé par le fait que la plaque de montage (36) est collée à la touche correspondante.

10. Dispositif à levier de commande selon la revendication 9, caractérisé par le fait que la plaque de montage (36) est revêtue d'une colle de contact sur sa surface de fixation à coller à la touche correspondante (28) et est pourvue sur la couche de colle de contact d'une couverture pourvue d'une couche antiadhésive et pouvant être retirée avant le collage à la touche (28).

11. Dispositif à levier de commande selon la revendication 10, caractérisé par le fait que la couche de colle de contact est prévue sur un support intermédiaire (38) placé sur la face inférieure de la plaque de montage dirigée vers la touche correspondante (28) et pouvant être comprimé d'une certaine quantité dans la direction d'actionnement de la touche.

12. Dispositif à levier de commande selon la revendication 4 ou selon l'une des revendications 5 à 10 lorsque celle-ci dépend de la revendication 4, caractérisé par le fait que l'extrémité côté clavier de la tige (26) du levier de commande est pourvue d'un filetage qui peut être vissé dans un taraudage complémentaire de la plaque de montage (36).

13. Dispositif à levier de commande selon la revendication 4 ou selon l'une des revendications 5 à 10 lorsque celle-ci dépend de la revendication 4, caractérisé par le fait que l'extrémité libre de la tige (26) du levier de commande est montée à friction dans un trou complémentaire de la plaque de montage (36).

14. Dispositif à levier de commande selon l'une des revendications 1 à 13, caractérisé par le fait que l'élément d'actionnement monobloc (14) est fabriqué en plastique par moulage par injection.

15. Dispositif à levier de commande selon l'une des revendications 1 à 14, caractérisé par le fait que la tige (26) du levier de commande est injectée en plastique par moulage par injection.

FIG.1

10

16    26
      24    16
14              18
         18
         20

         22

FIG.2

         22

| 7    | 8    | 9       |
| Home |      | Pg  Up  |
|      |      | 16  18  |

4         26         28

| 1    | 8    | 3       |
| End  |      | Pg  Dn  |

12

FIG.3

         30
10        26
          32    24
22    34    38    44
                  36
14

FIG. 5

26    34
40         36
   38    36A

FIG. 4